# EUROPEAN PATENT APPLICATION

(11) **EP 4 242 598 A1**
(43) Date of publication of application: **13.09.2023**
(21) Application number: 22160599.1
(22) Date of filing: 07.03.2022
(51) Int. Cl.: G01F 1/66, G01F 1/667

(54) **FLOW METER**

(71) Applicant: Danfoss A/S, 6430 Nordborg (DK)
(72) Inventor: Lindemann, Kim, 6430 Nordborg (DK)
(74) Representative: Patentanwälte Olbricht Buchhold Keulertz

(57) **Abstract**

The invention relates to a flow meter for fluids, the flow meter (10) comprising a central pipe (12) extending in a longitudinal direction (14) between a first pipe opening (16) and a second pipe opening (18), a first holding element (20) and a second holding element (22) being arranged in the central pipe (12), each holding element (20, 22) comprising at least one ultrasound reflector (24, 26), the ultrasound reflectors (24, 26) being arranged such that an ultrasound signal transmitted from a radial direction to at least one ultrasound reflector (24, 26) of the first holding element (20) is reflected towards at least one ultrasound reflector (24, 26) of the second holding element (22), and a first mounting element (30) and a second mounting element (32) for attaching the holding elements (20, 22) in the central pipe (12), at least one of the first and second mounting elements (30, 32) comprising at least one attachment section (44, 46) on two opposite sides for attaching the mounting element (30, 32) to the central pipe (12), wherein at least two grooves (38, 40) are arranged in the central pipe (12) on the first pipe opening (16) and/or the second pipe opening (18) and wherein the attachment sections (44, 46) of the two opposite sides of the mounting element (30, 32) are arranged in the grooves (38, 40) and at least one attachment section (44, 46) is locked in the longitudinal direction (14). The invention provides a flow meter (10) with an improved attachment of the holding elements to the central pipe.

## Description

The invention relates to a flow meter comprising: a central pipe; a first holding element and a second holding element, each holding element comprising at least one ultrasound reflector; a first mounting element and a second mounting element for attaching the holding elements in the central pipe.

Flow meters are used to measure the flow of fluids in a tube. The flow meters may use acoustic waves for the measurement, particularly ultrasonic waves. The fluid to be measured enters the tube through an inlet. Then, the fluid flows through a measuring area through which an emitter emits acoustic waves into the fluid. A detector measures the response of the acoustic waves in the fluid. The measuring area may comprise reflectors for reflecting the acoustic waves from the emitter through the fluid towards the detector. The reflectors are arranged at the measuring area in the tube via reflector holders.

From EP1890115 B1, it is known to provide an ultrasound flow meter having to holding plates for the reflector holders. The holding plates may be attached into grooves of a measuring channel ring that is arranged in the measuring channel to reduce the diameter of the measuring area.

There is a need to provide a flow meter with an improved attachment of the reflector holders to the measuring channel.

Claims 1 and 11 indicate the main features of the invention. Features of embodiments of the invention are subject of claims 2 to 10.

In an aspect of the invention, a flow meter for fluids is provided, the flow meter comprising: a central pipe extending in a longitudinal direction between a first pipe opening and a second pipe opening, a first holding element and a second holding element being arranged in the central pipe, each holding element comprising at least one ultrasound reflector, the ultrasound reflectors being arranged such that an ultrasound signal transmitted from a radial direction to at least one ultrasound reflector of the first holding element is reflected towards at least one ultrasound reflector of the second holding element, and a first mounting element and a second mounting element for attaching the holding elements in the central pipe, at least one of the first and second mounting elements comprising at least one attachment section on two opposite sides for attaching the mounting element to the central pipe, wherein at least two grooves are arranged in the central pipe on the first pipe opening and/or the second pipe opening and wherein the attachment sections of the two opposite sides of the mounting element are arranged in the grooves and at least one attachment section is, preferably positively, locked in the longitudinal direction.

The invention provides mounting elements that are locked on the central pipe after mounting the mounting elements in the central pipe. For example, each holding element may be supported by a mounting element. The attachment sections on two opposite sides of the mounting element extend into grooves on the central pipe. The grooves are arranged on the inner wall on of the central pipe. Furthermore, the grooves may face each other. This may for example mean, that the grooves are oriented such that a flat plate may be introduced in both groove. For example, the grooves are arranged diametrically inside the central pipe. Furthermore, the grooves may for example, extend in longitudinal direction from the respective first or second pipe opening towards the other pipe opening. It is not required that the grooves extend from one pipe opening to the other pipe opening. The attachment sections comprise means to lock the mounting element in longitudinal direction, preferably in a positive manner, which may also be called in a form-fit manner, when the mounting element is in a mounting position in the central pipe. In the mounting position, the mounting element is arranged in the central pipe. Before reaching the mounting position, the mounting element is unlocked in longitudinal direction. For example, before installing the mounting element, the mounting element may be arranged outside the central pipe. For installing the mounting element, an shoulder portion of the attachment sections may be arranged in the grooves. The mounting element may then for example be moved along the grooves such that the attachment section is moved along the groove. When the mounting element reaches the mounting position, at least one attachment section locks in the respective groove such that that attachment section is locked in longitudinal direction, preferably in a positive manner. This may also be called a locking in a form-fit manner. Due to the, preferably positive, locking in longitudinal direction that attachment section cannot be removed from the respective groove. The, preferably positive, locking of at least one attachment section in longitudinal direction provides a secure attachment of the mounting element on the central pipe. Due to, preferably positive, locking in longitudinal direction of the central pipe, the mounting elements may be have minimal dimensions. The mounting element may be provided with small thickness such that an impact on the fluid flow is minimal if the mounting element is aligned in parallel to the flow. Thus, the invention provides mounting elements that are minimized. Hence, the impact on the fluid flow is minimal. This improves the attachment of the reflector holders, further, since forces of the fluid flowing along the mounting element are minimized, too.

In an example, the ultrasound reflector of the second holding element may reflect the ultrasound signal towards the radial direction. The central pipe may comprise accommodations for ultrasound transducers. A first ultrasound transducer may be configured to emit an ultrasound signal to at least one ultrasound reflector of the first holding element, wherein the second ultrasound transducer is configured to receive an ultrasound signal from at least one ultrasound reflector of the second holding element. The ultrasound reflectors of the first and second holding element thus reflect the ultrasound signal from the first ultrasound transducer to the second ultrasound transducer. The first and second ultrasound transducer may be aligned such that they emit or receive ultrasound signals from a radial direction of the central pipe. The radial direction is understood to be orthogonal to a central axis of the central pipe, the central axis extending along the longitudinal direction.

In an example, flanges may be mounted to the central pipe at the first and second pipe opening. The flanges may be used to connect the central pipe to further pipes to mount the flow meter t an existing system of pipes. The flanges may for example be welded to the central pipe.

In an example, each groove may comprise at least one recess, wherein the at least one attachment section comprises at least one protrusion, the at least one protrusion extending into the at least one recess in a mounting position of the at least one mounting element.

The recess may extend in radial direction. The protrusion may for example also extend in radial direction, when the mounting element is in the mounting position. In the mounting position, the protrusion is then arranged at the position of the recess such that the protrusion is moved into the recess. When the protrusion engages the recess, the attachment section is locked in longitudinal direction. The recess may for example continue in circumferential direction around the longitudinal axis outside the groove. This may simplify the manufacturing of the recess. However, the recess extends deeper into the wall of the central pipe than the groove.

In another example, at least one attachment section may comprise at least one arm being parallel to the grooves and being arranged in one of the grooves, wherein at least a free end section of the at least one arm is flexible.

The arm may for example extend from a shoulder region attached to the mounting element to the free end section. A gap may be arranged adjacent to the arm between the arm and the rest of the mounting element. The gap may extend from the shoulder region along the arm. At least a free end section of the arm may be flexed into the gap. The gap may for example be arranged in radial direction with respect to the arm when the mounting element is arranged in the groove. When introducing the attachment section into the groove at least the free end section of the arm may flex into the gap. This may simplify the introduction of the arm into the groove. The free end section may comprise the protrusion. In the mounting position, at least the free end section of the arm may flex back such that the protrusion may be arranged in to the recess of the groove to lock the attachment section in longitudinal direction, preferably in a positive manner.

In a further example, both attachment sections comprise arms, wherein the arms on the two opposite sides may have a different length, the respective grooves having a corresponding different length.

Each arm may have a gap adjacent to the arm. The different length assign each arm to the respective grooves. Thus, the mounting element can only be mounted if each arm is arranged in the corresponding groove. If the arms are arranged in the groove, which do not have the corresponding length, at least the longer arm cannot be introduced into the groove that corresponds to the shorter arm. Hence, the mounting element cannot be put into the mounting position. The different lengths lead to a correct mounting and orientation of the mounting element.

The mounting element may for example comprise a locking member for locking a movement of at least the free end section of the at least one arm in radial direction, wherein the locking member is detachable from the mounting element to unlock at least the free end section of the arm.

The locking member may for example, be a bracket that immobilizes the arm such that the arm cannot move in radial direction, anymore. Without the radial movability, in longitudinal direction, the arm stays in the, preferably positively, locked position. If a gap is adjacent to the arm, the locking member may for example be introduced into the gap to fill the gap. The locking member may then hinder the least the free end section of the arm to move into the gap. The locking member may increase the mounting security of the mounting element.

For example, at least one of the first and second holding elements may comprise at least two parts being mounted on the mounting element.

One part of the holding element may be attached to one side of the mounting element. The other part may be attached to the opposite side of the mounting element. The parts of the holding element may sandwich the mounting element. The mounting element may comprise openings for connecting the parts of the holding element to each other.

In an example, the at least one mounting element may comprise at least one guide element for guiding a holding element into an attachment position.

For example, the guide element may comprise a hole pattern that matches to a pin or screw pattern of the parts of the holding element. The patterns may only match if the holding element is aligned correctly. Only if the patterns match, the holding element may be attached to the mounting element.

In another example, the flow meter may further comprise a liner being arranged between the at least two holding elements, wherein the ultrasound signal is reflected through the fluid in an opening of the liner.

The liner restricts the diameter of the central pipe. Hence, the liner increases the flow speed in the measuring area, to get more signal/information from the ultrasound signals used for measuring the flow speed.

The flow meter may for example further comprise at least one pair of ultrasound transducers, at least a first of the pair of ultrasound transducers being configured to emit an ultrasound signal, at least a second of the pair of ultrasound transducers being configured to receive the ultrasound signal, the at least one pair of ultrasound transducers being arranged such that the ultrasound signal is transmitted from the first ultrasound transducer to at least one ultrasound reflector of the first of the at least two holding elements, at least one ultrasound reflector of the second of the at least two holding elements and the second ultrasound transducer. In an example, both ultrasound transducers may emit and receive an ultrasound signal. Then, the ultrasound transducers do not emit an ultrasound signal at the same time.

The mounting element may for example be a plate.

This simplifies the handling and the manufacturing of the mounting element.

In an example, the grooves may extend from the first pipe opening and/or the second pipe opening into the central pipe.

Thus, the grooves may begin at the first or second pipe opening and extend into the central pipe. This simplifies the manufacturing of the grooves. Furthermore, this simplifies the installation of the mounting elements since the attachment sections of the mounting elements may just be aligned to the beginning of the grooves at the first of second pipe opening. After alignment, the attachment sections may be moved into the grooves until the mounting element is in the mounting position.

In an another aspect, a mounting element for mounting a holding element for at least one ultrasound reflector is provided, wherein the mounting element comprises at least one attachment section on two opposite sides for attaching the mounting element to a central pipe of a flow meter, wherein the attachment sections of the two opposite sides of the mounting element are configured to be arranged in grooves in the central pipe, the attachment sections being configured to be, preferably positively, locked in the longitudinal direction in the grooves.

The effects and further embodiments of the mounting element according to the present invention are analogous to the effects and embodiments of the flow meter according to the description mentioned above. Thus, it is referred to the above description of the flow meter.

Further features, details and advantages of the invention result from the wording of the claims as well as from the following description of exemplary embodiments based on the drawings. The figures show:
- Fig. 1a-c: a schematic drawing of a flow meter in different views; and
- Fig. 2: a schematic drawing of a mounting element.

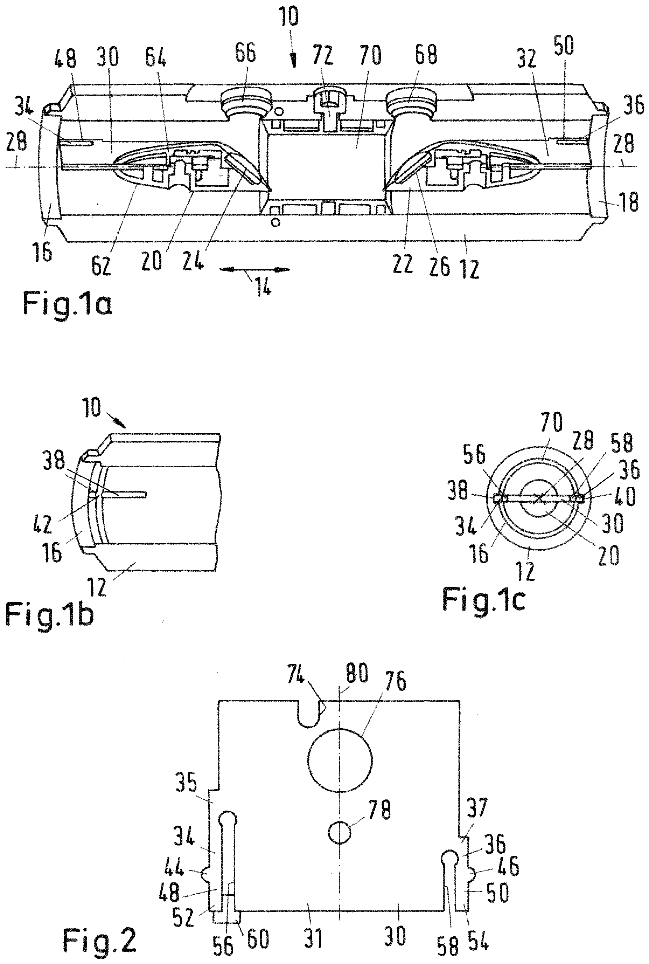

Fig. 1a shows a flow meter 10 comprising a central pipe 12. The central pipe 12 comprises a first pipe opening 16 and a second pipe opening 18. Furthermore, the central pipe 12 extends along a longitudinal direction 14 between the first and second pipe opening 16, 18. A longitudinal axis 28 extends in the center of the central pipe 12 through the first and second pipe openings 16, 18. Each pipe opening 16, 18 may be an inlet or an outlet for a fluid flowing through the central pipe 12.

The flow meter 10 further comprises accommodation openings 66, 68 in a wall element. The accommodation openings 66, 68 are configured to receive ultrasound transducers. In the accommodation openings 66, 68, the ultrasound transducers are aligned such that they may emit an ultrasound signal in a radial direction into the central pipe 12. The radial direction is orthogonal to the longitudinal axis 28.

The flow meter 10 further comprises a first holding element 20 and a second holding element 22 each being configured to support at least one ultrasound reflector 24, 26.

The first holding element 20 is arranged such that the at least one ultrasound reflector 24 is positioned in a path being radial with respect to accommodation opening 66. Thus, if an ultrasound transducer in the accommodation opening 66 emits an ultrasound signal in radial direction, the at least one ultrasound reflector 24 will reflect that signal.

The second holding element 22 is arranged such that the at least one ultrasound reflector 26 is positioned in a path being radial with respect to accommodation opening 68. Thus, if an ultrasound transducer in the accommodation opening 68 emits an ultrasound signal in radial direction, the at least one ultrasound reflector 26 will reflect that signal.

The ultrasound reflector 24 is aligned such that it reflects an ultrasound signal from the radial direction into the longitudinal direction 14, preferably along the longitudinal axis 28. Furthermore, the ultrasound reflector 24 may reflect an ultrasound signal coming from a direction being parallel to the radial direction towards the longitudinal direction 14, too.

The ultrasound reflector 26 is aligned such that it reflects an ultrasound signal from the radial direction into the longitudinal direction 14, preferably along or parallel to the longitudinal axis 28. Furthermore, the ultrasound reflector 26 may reflect an ultrasound signal coming from a direction being parallel to the radial direction towards the longitudinal direction 14, too.

Furthermore, the first and second holding elements 20, 22 arrange the ultrasound reflectors 24, 26 such that they are aligned in longitudinal direction. Hence, the ultrasound reflectors 24, 26 reflect an ultrasound signal from a radial direction towards each other.

A liner 70 may be arranged between the ultrasound reflectors 24, 26. An ultrasound signal being reflected from one ultrasound reflector 24, 26 to the other ultrasound reflector 24, 26 travels through the liner 70. At least one screw 72 may secure the liner 70 to the central pipe 12. If more than one screw 72 is used to secure the liner 70, the screws may be arranged on the same side or on opposite sides of the liner 70.

The first holding element 20 is mounted on a first mounting element 30. The second holding element 22 is mounted on a second mounting element 32. The second holding element 22 may have the same features as the first holding element 20. The first holding element 20 may comprise a first part 62 and a second part 64 being mounted on the first mounting element 30. The first part 62 and the second part 64 may sandwich the first mounting element 30, when the first holding element 20 is attached to the first mounting element 30.

The first part 62 or the second part 64 alone may comprise the ultrasound reflector 26. Thus, in the region of the ultrasound reflector 26, the first and second part 62, 64 may be split in an angle being parallel to the ultrasound reflector 26. The ultrasound reflector 26 may then be molded on the first or second part 62, 64, completely. This may further simplify the manufacturing process of the flow meter 10.

Furthermore, a thread insert for a screw may for example be mounted on the first or second part 62, 64 comprising the ultrasound reflector 26.

The split region between the first and second part 62, 64 may for example have an angle in the region of 35° to 145°, preferably 45°, from the surface connecting to the respective mounting element.

The first and second mounting elements 30, 32 attach the first and second holding element 20, 22 to the central pipe 12, respectively.

At least one of the first and second mounting elements 30, 32 comprises attachment sections 34, 36 for attaching the respective mounting element 30, 32 to the central pipe 12. In this example, both mounting elements 30, 32 comprise attachment sections 34, 36.

The attachment sections 34, 36 are arranged on two opposite sides of the mounting element 30, 32.

Fig. 1b shows the first pipe opening 16 of the central pipe 12. The flow meter 10 comprises a groove 38 extending from the first pipe opening 16 into the central pipe 12 along the longitudinal direction 14. The groove 38 comprises a recess 42 extending in radial direction into the wall of the central pipe 12. The recess 42 may be used in conjunction with one of the attachment sections 34, 36 to lock the movement of the attachment section 34, 36, in longitudinal direction 14. Furthermore, the recess 42 may extend in circumferential direction around the longitudinal axis outside the groove 38 to simplify the manufacturing of the recess 42. However, the recess 42 still extends deeper into the wall of the central pipe 10 than the groove 38.

Fig. 1c shows a view into the central pipe 12 from the first pipe opening 16. According to fig. 1c, the flow meter 10 further comprises another groove 40 on the first pipe opening 16. The groove 40 may also comprise a recess extending in radial direction into the wall of the central pipe 12.

The grooves 38, 40 may face each other. In this example, the grooves 38, 40 are arranged diametrically on the central pipe 12. However, in another example (not shown) the grooves 38, 40 may also be arranged such that a plane through the grooves 38, 40 is radially off-axis to the longitudinal axis 28.

In a mounting position of a mounting element, in which the mounting element is mounted to the flow meter 10, each attachment section 34, 36 is arranged in a groove 38, 40 as shown in fig. 1c.

Fig. 2 shows a first mounting element 30 having the shape of a plate. The second mounting element may have the same features as the first mounting element 30.

The first mounting element 30 comprises a first attachment section 34 shown on the left side of fig. 2 and a second attachment section 36 shown on the right side of fig. 2. The first and second attachment sections 34, 36 are arranged on opposite sides of the mounting element 30.

The first attachment section 34 comprises a first arm 48 extending from a shoulder portion 35 to a free end section 52. The shoulder portion 35 attaches the first arm 48 to a main body 31 of the first mounting element 30. When introducing the first mounting element 30 into the central pipe, the shoulder portion 35 is the first component of the attachment section 34 that contacts the respective groove.

Adjacent the first arm 48, the mounting element 30 comprises a first gap 56. The first arm 48 and the main body 31 of the mounting element 30 sandwich the first gap 56. At least the free end section 52 of the first arm 48 is flexible and can flex into the first gap 56. In this example, the complete first arm 48 is flexible and can flex into the first gap 56.

In the mounting position, the first arm 48 extends in longitudinal direction. The first arm 48 of fig. 2 has a shape corresponding to groove 38 shown in fig. 1b, such that the first arm 48 can be introduced into the groove 38.

Furthermore, the first arm 48 comprises a protrusion 44. The protrusion 44 may extend orthogonally to the first arm 48. In the mounting position, the protrusion 44 of fig. 2 may extend into the recess 42 of groove 38 shown in fig. 1b. If the protrusion 44 is arranged in the groove, a movement of the first arm in longitudinal direction is locked.

The second attachment section 36 may comprise a second arm 50 extending from a second shoulder portion 37 to a second free end section 54. The shoulder portion 37 attaches the second arm 50 to a main body 31 of the first mounting element 30. When introducing the first mounting element 30 into the central pipe, the shoulder portion 37 is the first component of the attachment section 36 that contacts the respective groove.

Adjacent the second arm 50, the first mounting element 30 comprises a second gap 58. The second arm 50 and the main body 31 of the mounting element 30 sandwich the second gap 58. At least the second free end section 54 of the second arm 50 is flexible and can flex into the second gap 58. In this example, the complete second arm 50 is flexible and can flex into the second gap 58.

In the mounting position, the second arm 50 extends in longitudinal direction. The second arm 50 of fig. 2 has a shape corresponding to groove 40 shown in fig. 1c, such that the second arm 50 can be introduced into the groove 40.

Furthermore, the second arm 50 comprises a further protrusion 46. The further protrusion 46 may extend orthogonally to the second arm 50. In the mounting position, the further protrusion 46 of fig. 2 may extend into a recess (not shown) of groove 40 shown in fig. 1c. If the further protrusion 46 is arranged in the groove, a movement of the second arm 50 in longitudinal direction is locked.

The first arm 48 and the second arm 50 may comprise different lengths between the respective shoulder portions 35, 37 and the respective free end sections 52, 54. Correspondingly, the associated grooves 38, 40 may have the same difference in length. Hence, the longer arm may only correctly introduced into the longer groove. Thus, the first mounting element 30 may only mounted in a predetermined orientation to the central pipe.

The first mounting element 30 may comprise at least one guide element 74 for guiding a holding element into an attachment position. The guide element 74 may be configured to align a holding element to be attached to the first mounting element 30. During the attachment of the holding element to the first mounting element 30, the holding element may be aligned such that the ultrasound reflectors of the holding element are aligned into a predetermined position with respect to the first mounting element 30.

The guide element 74 may comprise a clearance being arranged on the main body 31 of the first mounting element 30. The clearance may be arranged off axis to a central axis 80 of the first mounting element 30. The holding element may comprise a pin that corresponds to the clearance and that is arranged on a corresponding position on the holding element. Furthermore, the first mounting element 30 may comprise openings 76, 78 for attaching the first and second part of a holding element to the first mounting element 30 with screws, for example. Those openings 76, 78 may be arranged along the central axis 80. When attaching the holding element to the first mounting element 30, the combination of the pin of the holding element and the guide element 74 define the alignment of the holding element on the first mounting element 30.

The flow meter 10 may further comprise a locking member 60. Locking member 60 is configured to be inserted into a portion of the first gap 56 and may be a bracket. When the locking member 60 is introduced into the first gap 56, the locking member 60 blocks a movement of the free end section 52 into the first gap 56. Thus, the free end section 52 of the first arm 48 cannot flex into the first gap 56, if the locking member 60 is introduced into the first gap 56. Then, the flexibility of the free end section 52 and of the first arm 48 is locked.

Another locking member may be configured to be inserted into a portion of the second gap 58 to lock the flexibility of the second arm 50.

The dimension of the first mounting element 30 in longitudinal direction in the mounting position may be such that the attachment sections 34, 36 are arranged on the respective pipe opening and the ultrasound reflector of the holding element being attached to the first mounting element 30 may be arranged on the correct position inside the central pipe. Therefore, the longer the distance between the pipe opening and the respective accommodation opening of the ultrasound transducer, the longer may be the dimension of the first mounting element 30 in the longitudinal direction, in the mounting position.

The invention is not limited to one of the aforementioned embodiments. It can be modified in many ways.

All features and advantages resulting from the claims, the description and the drawing, including constructive details, spatial arrangements and procedural steps, may be essential for the invention both in themselves and in various combinations.

**List of reference signs**

| | | | |
|---|---|---|---|
| 10 | flow meter | 44 | protrusion |
| 12 | central pipe | 46 | protrusion |
| 14 | longitudinal direction | 48 | first arm |
| 16 | first pipe opening | 50 | second arm |
| 18 | second pipe opening | 52 | free end section |
| 20 | first holding element | 54 | free end section |
| 22 | second holding element | 56 | first gap |
| 24 | ultrasound reflector | 58 | second gap |
| 26 | ultrasound reflector | 60 | locking member |
| 28 | longitudinal axis | 62 | first part |
| 30 | first mounting element | 64 | second part |
| 31 | main body | 66 | accommodation opening |
| 32 | second mounting element | 68 | accommodation opening |
| 34 | attachment section | 70 | liner |
| 35 | shoulder portion | 72 | screw |
| 36 | attachment section | 74 | guide element |
| 37 | shoulder portion | 76 | opening |
| 38 | groove | 78 | opening |
| 40 | groove | 80 | central axis |
| 42 | recess | | |

## Claims

1. Flow meter for fluids, the flow meter (10) comprising:
- a central pipe (12) extending in a longitudinal direction (14) between a first pipe opening (16) and a second pipe opening (18),
- a first holding element (20) and a second holding element (22) being arranged in the central pipe (12), each holding element (20, 22) comprising at least one ultrasound reflector (24, 26), the ultrasound reflectors (24, 26) being arranged such that an ultrasound signal transmitted from a radial direction to at least one ultrasound reflector (24, 26) of the first holding element (20) is reflected towards at least one ultrasound reflector (24, 26) of the second holding element (22), and
- a first mounting element (30) and a second mounting element (32) for attaching the holding elements (20, 22) in the central pipe (12), at least one of the first and second mounting elements (30, 32) comprising at least one attachment section (44, 46) on two opposite sides for attaching the mounting element (30, 32) to the central pipe (12),
wherein at least two grooves (38, 40) are arranged in the central pipe (12) on the first pipe opening (16) and/or the second pipe opening (18) and wherein the attachment sections (44, 46) of the two opposite sides of the mounting element (30, 32) are arranged in the grooves (38, 40) and at least one attachment section (44, 46) is locked in the longitudinal direction (14).

2. Flow meter according to claim 1, wherein each groove (38, 40) comprises at least one recess (42), wherein the at least one attachment section (44, 46) comprises at least one protrusion (44, 46), the at least one protrusion (44, 46) extending into the at least one recess (42) in a mounting position of the at least one mounting element (30, 32).

3. Flow meter according to claim 1 or 2, wherein the at least one attachment section (44, 46) comprises at least one arm (34, 36) being parallel to the grooves (38, 40) and being arranged in one of the grooves (38, 40), wherein at least a free end section (52, 54) of the at least one arm (34, 36) is flexible.

4. Flow meter according to claim 3, wherein both attachment sections (44, 46) comprise arms, wherein the arms (34, 36) on the two opposite sides have a different length, the respective grooves (38, 40) having a corresponding different length.

5. Flow meter according to claim 3 or 4, wherein the mounting element (30, 32) comprises a locking member (60) for locking a movement of at least the free end section (52, 54) of the at least one arm (34, 36) in radial direction, wherein the locking member (60) is detachable from the mounting element (30, 32) to unlock at least the free end section (52, 54) of the arm (34, 36).

6. Flow meter according to one of claims 1 to 5, wherein at least one of the first and second holding elements (20, 22) comprises at least two parts being mounted on the mounting element (30, 32).

7. Flow meter according to one of claims 1 to 6, wherein the at least one mounting element (30, 32) comprises at least one guide element (74) for guiding a holding element into an attachment position.

8. Flow meter according to one of claims 1 to 7, wherein the flow meter (10) further comprises a liner (70) being arranged between the at least two holding elements (20, 22), wherein the ultrasound signal is reflected through the fluid in an opening of the liner (70).

9. Flow meter according to one of claims 1 to 8, wherein the mounting element (30, 32) is a plate.

10. Flow meter according to one of claims 1 to 9, wherein the grooves (38, 40) extend from the first pipe opening (16) and/or the second pipe opening (18) into the central pipe (12).

11. Mounting element for mounting a holding element for at least one ultrasound reflector (24, 26) in a flow meter (10), wherein the mounting element (30, 32) comprises at least one attachment section (44, 46) on two opposite sides for attaching the mounting element (30, 32) to a central pipe (12) of a flow meter (10), wherein the attachment sections (44, 46) of the two opposite sides of the mounting element (30, 32) are configured to be arranged in grooves (38, 40) in the central pipe (12), the attachment sections (44, 46) being configured to be locked in the longitudinal direction (14) in the grooves (38, 40).
